# EUROPÄISCHE PATENTANMELDUNG

(11) **EP 1 335 218 A1**
(43) Veröffentlichungstag der Anmeldung: **13.08.2003**
(21) Anmeldenummer: 03100230.6
(22) Anmeldetag: 05.02.2003
(51) Int. Cl.: G02B 6/00

(54) **Lichtleiteranordnung und Beleuchtungseinrichtung mit einer solchen Anordnung**

(30) Priorität: 07.02.2002 DE 10205051
(71) Anmelder: Philips Intellectual Property & Standards GmbH, 20099 Hamburg (DE); Koninklijke Philips Electronics N.V., 5621 BA Eindhoven (NL)
(72) Erfinder: Schwengler, Sigurd, 52088, Aachen (DE); Westbrock, Rainer, 52088, Aachen (DE)
(74) Vertreter: Volmer, Georg, Dipl.-Ing.

(57) **Zusammenfassung**

Es wird eine Lichtleiteranordnung (10) zur gerichteten Abstrahlung von eingekoppeltem Licht sowie eine Beleuchtungseinrichtung mit einer solchen Lichtleiteranordnung (10) beschrieben. Die Lichtleiteranordnung (10) zeichnet sich insbesondere durch eine Mehrzahl von lichtleitenden Elementen (3) aus, die jeweils eine total reflektierende Endfläche (51) mit einem solchen Winkel zu einer Einfallsrichtung des Lichtes einer Lichtquelle (1) aufweisen, dass das auftreffende Licht zumindest weitgehend in eine Hauptabstrahlrichtung (R) reflektiert wird, und wobei die lichtleitenden Elemente (3) in der Hauptabstrahlrichtung (R) voreinander angeordnet sind und in der Weise abnehmende Längen aufweisen, dass eine gegenseitige Abschattung der lichtleitenden Elemente (3) zumindest weitgehend vermieden wird. Damit können sowohl asymmetrische als auch symmetrische Lichtstärkeverteilungen erzielt werden, um zum Beispiel Flächen mit verschiedenen Neigungswinkeln mit hohem Wirkungsgrad senkrecht zu beleuchten. Die Lichtleiteranordnung hat gegenüber einem einzelnen Prisma mit gleicher lichttechnisch wirksamer Fläche weiterhin eine wesentlich kompaktere Bauweise und ein geringeres Gewicht.

## Beschreibung

Die Erfindung betrifft eine Lichtleiteranordnung zur gerichteten Abstrahlung von eingekoppeltem Licht, sowie eine Beleuchtungseinrichtung mit einer solchen Lichtleiteranordnung und einer Lichtquelle insbesondere in gestreckter Bauart.

Lichtleiteranordnungen dieser Art bestehen aus einem Material mit einer gegenüber Luft höheren optischen Dichte, das heißt einer Brechungszahl, die größer als 1 ist, und dienen unter anderem dazu, das von einer Lichtquelle ausgehende Licht in gewünschter Weise in eine bestimmte Richtung zu bündeln bzw. in Kombination mit einer oder mehreren Lichtquellen eine Beleuchtungseinrichtung mit einer bestimmten Charakteristik der Lichtstärkeverteilung zu schaffen.

Aus der DE 43 44 979 ist zum Beispiel eine Lichtleiteranordnung für eine langgestreckte Lichtquelle bekannt, die Lichteintritts- und Lichtaustrittsbereiche sowie dazwischen nebeneinander angeordnete Stege aufweist, deren Seitenflächen für darauf einfallende, von der Lichtquelle ausgehende Lichtstrahlen totalreflektierend sind. Die Stege sind parallel zur Längsrichtung der Lichtquelle verlaufend voneinander beabstandet und bilden zwei Gruppen, die symmetrisch zu einer durch die Lichtquelle verlaufenden Mittelebene und schräg auseinanderlaufend angeordnet sind. Die Lichteintritts- und Lichtaustrittsbereiche haben dabei einen Neigungswinkel von 90+/-35 Grad oder 90+/-15 Grad zur Richtung der von der Lichtquelle ausgehenden Hauptstrahlen. Damit soll mit einer langgestreckten Lichtquelle eine optimale Lichtverteilungskurve bei gutem Beleuchtungswirkungsgrad, d. h. eine gute Ausleuchtung ohne Blendung erzielt werden.

Ein Nachteil dieser Anordnung besteht jedoch darin, dass der Wirkungsgrad und die Abstrahlcharakteristik durch Nebenstrahlen, die außer den Hauptstrahlen ebenfalls von der Lichtquelle abgegeben werden, erheblich beeinträchtigt werden kann.

Weitere Nachteile können sich daraus ergeben, dass zwischen den Stegen relativ breite Luftspalte vorhanden sind, so dass die sich dort ausbreitenden Lichtstrahlen teilweise in die Stege hineingebrochen und teilweise an den Stegen reflektiert werden und ebenfalls die Abstrahlcharakteristik und den Wirkungsgrad beeinträchtigen.

Eine Aufgabe, die der Erfindung zugrunde liegt, besteht darin, eine Lichtleiteranordnung zu schaffen, die insbesondere zur Anwendung mit Lichtquellen gestreckter Bauart wie zum Beispiel Kompaktleuchtstofflampen mit einem oder mehreren U-förmigen Außenkolben, aber auch Hochdruckgasentladungslampen, geeignet ist, um eine Abstrahlung in einer gewünschten Richtung mit einer gewünschten Charakteristik (Lichtstärkeverteilung) zu erzielen.

Weiterhin soll eine Lichtleiteranordnung geschaffen werden, die geringere Lichtverluste und somit einen verbesserten Wirkungsgrad aufweist.

Mit der Erfindung soll auch eine Beleuchtungseinrichtung mit einer Lichtquelle gestreckter Bauart und einer solchen Lichtleiteranordnung geschaffen werden, mit der eine Abstrahlung in einer gewünschten Richtung mit einem hohem Wirkungsgrad und einer in weiten Bereichen wählbaren Lichtstärkeverteilung erzielt werden kann.

Gelöst wird die Aufgabe gemäß Anspruch 1 mit einer Lichtleiteranordnung mit einer Mehrzahl von lichtleitenden Elementen, die jeweils eine total reflektierende Endfläche mit einem solchen Winkel zu einer Einfallsrichtung des Lichtes einer Lichtquelle aufweisen, dass das auftreffende Licht zumindest weitgehend in eine Hauptabstrahlrichtung reflektiert wird, wobei die lichtleitenden Elemente in der Hauptabstrahlrichtung voreinander angeordnet sind und in der Weise abnehmende Längen aufweisen, dass eine gegenseitige Abschattung der lichtleitenden Elemente zumindest weitgehend vermieden wird.

Die Aufgabe wird außerdem gemäss Anspruch 2 mit einer Beleuchtungseinrichtung mit einer solchen Lichtleiteranordnung gelöst.

Ein besonderer Vorteil dieser Lösungen besteht darin, dass insbesondere asymmetrische Lichtstärkeverteilungen, zum Beispiel zur senkrechten Beleuchtung von Flächen, die schräg zur Richtung der Länge der lichtleitenden Elemente verlaufen, aber auch symmetrische Lichtstärkeverteilungen, insbesondere durch Kombination zweier spiegelbildlich angeordneter Lichtleiteranordnungen, mit entsprechend günstigen Eigenschaften erzeugt werden können, um zum Beispiel senkrecht zur Richtung der Länge der lichtleitenden Elemente liegende Flächen mit hohem Wirkungsgrad zu beleuchten.

Weiterhin hat die erfindungsgemäße Lichtleiteranordnung gegenüber einem einzelnen Prisma mit gleicher lichttechnisch wirksamer Fläche erhebliche Vorteile im Hinblick auf eine wesentlich kompaktere Bauweise und ein geringeres Gewicht.

Die Unteransprüche haben vorteilhafte Weiterbildungen der Erfindung zum Inhalt.

Mit der Ausführung gemäß Anspruch 3 kann insbesondere bei Lichtquellen gestreckter Bauart eine optimale Lichtstärkeverteilung in einer zu beleuchtenden Fläche erzielt werden.

Die Ansprüche 4 und 5 haben bevorzugte Formen der lichtleitenden Elemente zum Inhalt, während mit der Beleuchtungseinrichtung gemäss Anspruch 6 eine symmetrische Abstrahlcharakteristik erzielt werden kann.

Die Ausführungen gemäß den Ansprüchen 7 und 8 sind insbesondere im Hinblick auf einen hohen Wirkungsgrad und geringes Streulicht von Vorteil.

Mit der Ausführung gemäß Anspruch 9 kann im Zusammenwirken mit einem entsprechenden Reflektor eine besonders gute Lichteinkopplung in die Lichtleiteranordnung erzielt werden.

Weitere Einzelheiten, Merkmale und Vorteile der Erfindung ergeben sich aus der folgenden Beschreibung von bevorzugten Ausführungsformen anhand der Zeichnung. Es zeigt:
- Fig. 1: eine schematische Seitenansicht einer ersten Ausführungsform einer Beleuchtungseinrichtung;
- Fig. 2: eine Draufsicht auf die in Figur 1 gezeigte Beleuchtungseinrichtung;
- Fig. 3: eine schematische Seitenansicht einer zweiten Ausführungsform der Beleuchtungseinrichtung; und
- Fig. 4: eine Draufsicht auf eine dritte Ausführungsform der Beleuchtungseinrichtung.

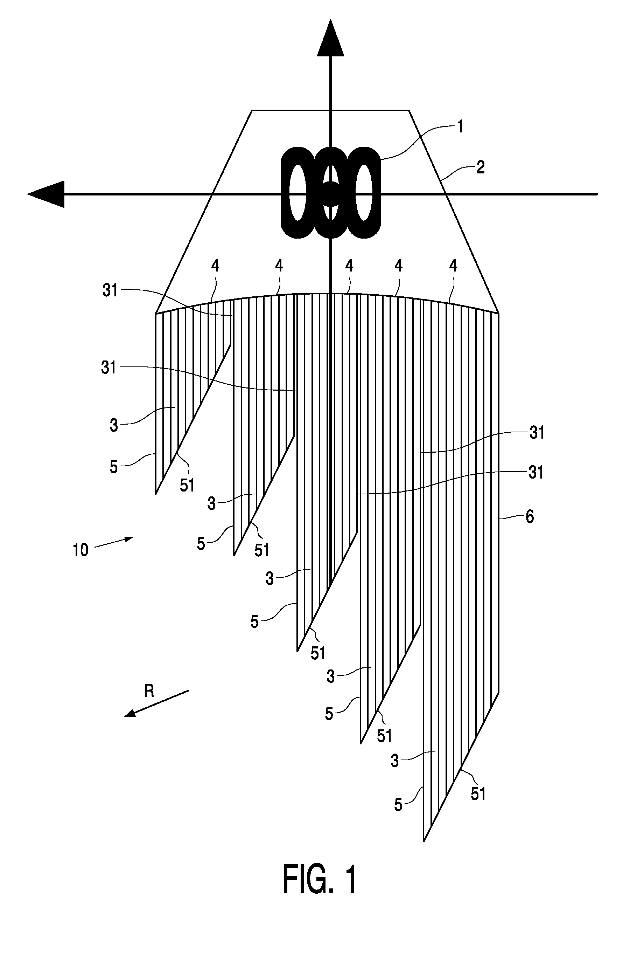

Die Beleuchtungseinrichtung umfasst gemäß Figur 1 eine gestreckte Lichtquelle 1 in Form einer Kompaktleuchtstofflampe mit drei U-förmigen Außenkolben, die sich senkrecht zur Zeichenebene erstrecken. Alternativ dazu könnte auch eine Leuchtstoffröhren oder eine oder mehrere im wesentlichen punktförmige Lichtquellen wie zum Beispiel Hochdruckgasentladungslampen verwendet werden.

Die Lichtquelle 1 ist von einem Reflektor 2 umgeben, mit dem das erzeugte Licht in Form eines zumindest im wesentlichen parallelen Strahlenbündels abgegeben wird. Der Reflektor 2 ist entsprechend der Form und Ausdehnung der Lichtquelle 1 gestaltet und kann rotationssymmetrisch, rinnenförmig oder ähnlich geformt sein.

Mit dem Reflektor 2 wird das von der Lichtquelle 1 erzeugte Licht in Lichteintrittsseiten 4 einer Mehrzahl von einzelnen lichtleitenden Elementen 3, die eine Lichtleiteranordnung 10 bilden, gerichtet, so dass sich das Licht im wesentlichen geradlinig in den lichtleitenden Elementen 3 ausbreitet.

Die Lichteintrittsseiten 4 bilden zur Verbesserung der Lichteinkopplung eine von der Mitte unterhalb der Lichtquelle 1 in Richtung nach außen geneigte Fläche, deren Neigung (ansteigend oder abfallend) in Abhängigkeit von der Position der Lichtquelle 1 und deren Abstand von den Lichteintrittsseiten 4 einen Winkel im Bereich zwischen 0 und 30 Grad zu einer zu der Einfallsrichtung des Lichtes senkrechten Fläche haben kann.

Die lichtleitenden Elemente 3 weisen an ihren den Lichteintrittsseiten 4 gegenüberliegenden Enden jeweils eine geneigte Endfläche 51 auf. Die Endflächen 51 sind jeweils mit einem solchen Winkel zu den sich in den lichtleitenden Elementen geradlinig ausbreitenden Lichtstrahlen geneigt, dass diese durch Totalreflektion an den Endflächen 51 in eine gewünschte Hauptabstrahlrichtung R der Beleuchtungseinrichtung reflektiert werden. In Abhängigkeit von der zu erzielenden Lichtstärkeverteilung können diese Neigungswinkel bei allen Elemente 3 gleich oder auch unterschiedlich sein.

Der maximale Wert dieses Neigungswinkels ist gleich dem Wert des Winkels der Totalreflektion, der von der Brechungszahl des für die Elemente 3 gewählten Materials bestimmt wird, während der minimale Wert theoretisch bei Null Grad liegen kann. Bei der praktischen Ausführung liegt dieser Winkel im allgemeinen in einem Bereich zwischen etwa 20 und etwa 40 Grad.

Aus Figur 1 wird weiterhin deutlich, dass die lichtleitenden Elemente 3 in der Hauptabstrahlrichtung R voreinander angeordnet sind und abnehmende Längen aufweisen. Die Längen sind dabei so bemessen, dass das von einem lichtleitenden Element 3 reflektierte Licht nicht durch ein in der Hauptabstrahlrichtung davor liegendes lichtleitendes Element abgeschattet wird. Die Bemessung der Längen ist somit sowohl von dem Neigungswinkel der Endflächen 51 und der dadurch bestimmten Hauptabstrahlrichtung, als auch von der Stärke der lichtleitenden Elemente abhängig.

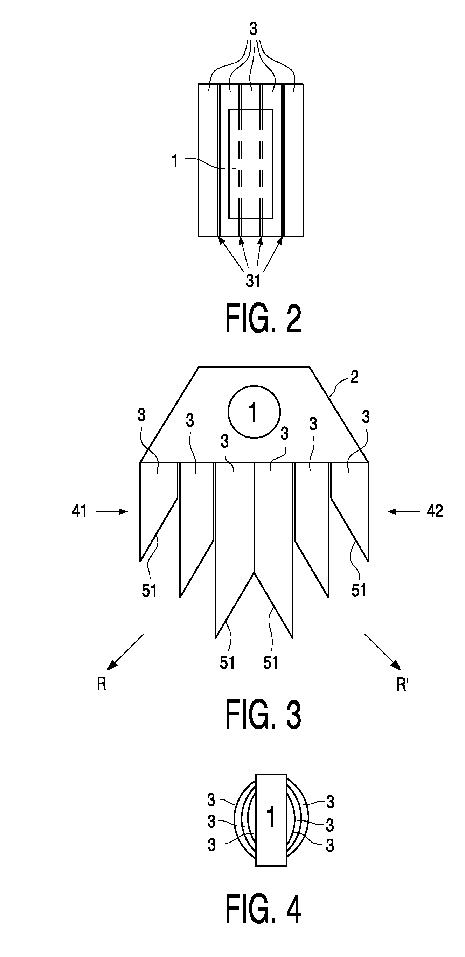

Wie in der Draufsicht gemäß Figur 2 zu erkennen ist, erstrecken sich die lichtleitenden Elemente 3 mit ihrer Breite in Richtung der Längsausdehnung der Lichtquelle 1 (schematisch und ohne Reflektor angedeutet) und sind in einer Richtung senkrecht dazu, die auch die Hauptabstrahlrichtung R ist, parallel nebeneinander angeordnet, wobei sich zwischen ihnen jeweils ein schmaler Luftspalt 31 befindet.

Die Luftspalte 31 sind nur so breit, dass sie eine Totalreflektion von solchen Lichtstrahlen bewirken, die innerhalb der lichtleitenden Elemente 3 auf deren an den Luftspalt 31 angrenzende Seitenflächen auftreffen. Durch den möglichst schmalen Luftspalt, d. h. den geringen Abstand der einzelnen lichtleitenden Elemente 3 wird gleichzeitig vermieden, dass wesentliche Lichtanteile an den Lichteintrittsseiten 4 in die Luftspalte 31 eindringen können, wo sie durch teilweise Reflektion und teilweise Brechung in die lichtleitenden Elemente 3 zu unerwünschtem Streulicht und Verlusten führen würden. Die bevorzugte Breite der Luftspalte 31 liegt zwischen etwa 0,5 und etwa 1 mm.

An den äußeren Seitenflächen der äußeren lichtleitenden Elemente 3 kann sich anstelle eines weiteren solchen Elementes ein anderes optisches Element 6 (Figur 1) wie zum Beispiel eine Beschichtung befinden, die die gleiche Funktion wie die Luftspalte 31 erfüllt. Damit wird gleichzeitig verhindert, dass Lichtstrahlen die Lichtleiteranordnung 10 in einer unerwünschten seitlichen Richtung verlassen können.

Die lichtleitenden Elemente 3 sind vorzugsweise durch jeweils eine Platte aus einem lichtdurchlässigen Material mit einer entsprechenden Brechungszahl hergestellt, deren Dicke zum Beispiel in einem Bereich zwischen etwa 2 und etwa 25 mm liegt. Die Abmessungen und die Anzahl der Elemente 3 sind im wesentlichen durch die Größe der Öffnung des Reflektors 2 und die gewünschte Hauptabstrahlrichtung R gegeben.

Bei entsprechend großen Abmessungen könnte jedes lichtleitende Elemente 3 auch wiederum aus einzelnen, miteinander verklebten Platten zusammengesetzt sein, wie sie in Figur 1 angedeutet sind.

Dadurch, dass sich die Lichtleiteranordnung 10 aus einer Mehrzahl von einzelnen lichtleitenden Elementen 3 zusammensetzt, wird nicht nur ein besonders hoher Anteil von sich zumindest weitgehend geradlinig ausbreitenden Lichtstrahlen zur Beleuchtung eines Objektes verwendet, sondern es ist auch eine wesentlich kompaktere Bauweise und eine einfachere Herstellung möglich als im Fall eines massiven Prismas. Dies betrifft insbesondere die Ausgestaltung im Hinblick auf die unterschiedlichen Längen der lichtleitenden Elemente 3.

Bei der in Figur 1 dargestellten ersten Ausführungsform verläuft die senkrecht beleuchtete Ebene schräg zu der Richtung des in die lichtleitenden Elemente 3 eingekoppelten und sich in diesen ausbreitenden Lichtes (d. h. der Richtung der Längsausdehnung der Elemente). Wenn jedoch eine Ebene senkrecht zu der Richtung des eingekoppelten Lichtes beleuchtet werden soll, so besteht bei der zweiten Ausführungsform die Möglichkeit, die Lichtleiteranordnung gemäß der Seitenansicht in Figur 3 aus zwei Gruppen 41, 42 von lichtleitenden Elementen 3 zusammenzusetzen, deren Endflächen 51 und Längen in der Seitenansicht spiegelbildlich zueinander verlaufen, so dass eine Gruppe in Richtung der dargestellten Hauptabstrahlrichtung R und die andere Gruppe in der spiegelbildlich gerichteten Hauptabstrahlrichtung R' abstrahlt. Dadurch wird eine in seitlicher Ansicht symmetrische Abstrahlcharakteristik erzielt. Im Hinblick auf alle anderen Merkmale entspricht diese Ausführungsform der in Figur 1 gezeigten Ausführungsform. Mit dieser Lichtleiteranordnung ergeben sich auch die gleichen Vorteile und positiven Eigenschaften, wie sie oben beschrieben wurden.

Eine dritte Ausführungsform ist in Draufsicht schematisch in Figur 4 gezeigt. Die gestreckte Lichtquelle 1 ist wiederum nur schematisch angedeutet, und der Reflektor wurde aus Darstellungsgründen weggelassen. Der wesentliche Unterschied zu den oben beschriebenen Ausführungen besteht darin, dass die lichtleitenden Elemente 3 nicht geradlinig verlaufen sondern eine Krümmung aufweisen und zumindest im wesentlichen konzentrisch ineinander liegen. Im Hinblick auf ihre Längen und Endflächen gilt das gleiche, wie bei den oben beschriebenen lichtleitenden Elementen.

Die lichtleitenden Elemente 3 können dabei jeweils auch in der Draufsicht geschlossene oder nicht geschlossene Kreise, Ovale, Ellipsen oder ähnliche Formen bilden.

Mit einer solchen Lichtleiteranordnung kann eine in der Draufsicht radiale Lichtstärkeverteilung bzw. Abstrahlcharakteristik erzielt werden, wobei insbesondere auch punktförmige Lichtquellen zum Einsatz kommen können.

Die allen Ausführungsformen gemeinsame Funktion der Beleuchtungseinrichtung besteht also darin, dass das von der Lichtquelle 1 ausgehende Licht mit dem Reflektor 2 in Form eines zumindest im wesentlichen parallelen Strahlenbündels in die Lichteintrittsseiten 4 der Lichtleiteranordnung 10 gerichtet wird, so dass es sich in den lichtleitenden Elementen 3 im wesentlichen geradlinig ausbreitet und an deren Endflächen 51 durch prismatische Reflektion (Totalreflektion) in eine Hauptabstrahlrichtung R gerichtet wird. Diejenigen Bereiche der Seitenwände der lichtleitenden Elemente 3, durch die das Licht nach Reflektion an den Endflächen 51 hindurchtritt, bilden dabei die Lichtaustrittsseiten 5.

Sowohl vor den Lichteintrittsseiten 4, als auch vor den Lichtaustrittsseiten 5 können zusätzliche optische Elemente wie zum Beispiel Linsen oder Blenden angeordnet werden, um eine weitere Bündelung oder eine Streuung des Lichtes zu erzielen.

Die erfindungsgemäße Beleuchtungseinrichtung ist insbesondere zur senkrechten Beleuchtung von zur Richtung der Länge der lichtleitenden Elemente 3 schrägen bzw. geneigten Flächen vorteilhaft anwendbar, da sich durch die entsprechende Bemessung der Längen der einzelnen lichtleitenden Elemente 3 sowie der ggf unterschiedlichen Winkel der Endflächen 51 eine sehr wirksame, das heißt verlustarme sowie eine an nahezu jeden Verlauf der zu beleuchtenden Fläche anpassbare Lichtstärkeverteilung erzielen lässt.

## Patentansprüche

1. Lichtleiteranordnung mit einer Mehrzahl von lichtleitenden Elementen (3), die jeweils eine total reflektierende Endfläche (51) mit einem solchen Winkel zu einer Einfallsrichtung des Lichtes einer Lichtquelle (1) aufweisen, dass das auftreffende Licht zumindest weitgehend in eine Hauptabstrahlrichtung (R) reflektiert wird, wobei die lichtleitenden Elemente (3) in der Hauptabstrahlrichtung (R) voreinander angeordnet sind und in der Weise abnehmende Längen aufweisen, dass eine gegenseitige Abschattung der lichtleitenden Elemente (3) zumindest weitgehend vermieden wird.

2. Beleuchtungseinrichtung mit einer Lichtleiteranordnung (10) nach Anspruch 1 und mit mindestens einer Lichtquelle (1) wie einer Kompaktleuchtstofflampe oder einer Hochdruckgasentladungslampe.

3. Beleuchtungseinrichtung nach Anspruch 2,
bei der die Lichtquelle (1) eine Längsausdehnung aufweist und sich die lichtleitenden Elemente (3) mit ihrer Breite parallel zur Längsausdehnung der Lichtquelle (1) erstrecken.

4. Beleuchtungseinrichtung nach Anspruch 2,
bei der die lichtleitenden Elemente (3) plattenförmige Elemente sind.

5. Beleuchtungseinrichtung nach Anspruch 2,
bei der die lichtleitenden Elemente (3) eine Krümmung aufweisen und zumindest im wesentlichen konzentrisch ineinander liegen.

6. Beleuchtungseinrichtung nach Anspruch 2,
bei der die Lichtleiteranordnung (10) aus einer ersten und einer zweiten Gruppe (41, 42) von lichtleitenden Elementen (3) gebildet ist, wobei die Gruppen zur Erzeugung einer im wesentlichen symmetrischen Abstrahlcharakteristik spiegelsymmetrisch zueinander angeordnet sind.

7. Beleuchtungseinrichtung nach Anspruch 2,
bei der sich zwischen den lichtleitenden Elementen (3) ein Luftspalt (31) befindet, der nur so schmal ist, dass er eine Totalreflektion von in den Elementen (3) geführtem Licht bewirkt, das auf deren Seitenwände auftrifft.

8. Beleuchtungseinrichtung nach Anspruch 2,
mit einem Reflektor (2), mit dem das von der mindestens einen Lichtquelle (1) erzeugte Licht in Form eines zumindest im wesentlichen parallelen Strahlenbündels in eine der Endfläche (51) gegenüberliegende Lichteintrittsseite (4) der lichtleitenden Elemente (3) gerichtet wird.

9. Beleuchtungseinrichtung nach Anspruch 2,
bei der die Lichteintrittsseiten (4) der lichtleitenden Elemente (3) eine geneigte Fläche mit einem Neigungswinkel im Bereich zwischen etwa 0 und etwa 30 Grad zu einer zu der Einfallsrichtung des Lichtes senkrechten Fläche bilden.

10. Beleuchtungseinrichtung nach Anspruch 2,
bei der die total reflektierende Endfläche (51) einen spitzen Winkel von zwischen etwa 20 und etwa 40 Grad zur Einfallsrichtung des Lichtes bildet.
